# FASCICULE DE BREVET EUROPEEN

(11) **EP 3 754 319 B1**
(45) Date de publication et mention de la délivrance du brevet: **27.03.2024**
(21) Numéro de dépôt: 20180629.6
(22) Date de dépôt: 17.06.2020
(51) Int. Cl.: G01L 19/06, G01L 23/32, F16K 17/16, H01H 35/24, F16K 37/00, H01H 35/26

(54) **INDICATEUR IRREVERSIBLE DE VARIATION DE PRESSION**
IRREVERSIBLER ANZEIGER VON DRUCKVERÄNDERUNGEN
IRREVERSIBLE PRESSURE VARIATION INDICATOR

(30) Priorité: 20.06.2019 FR 1906646
(43) Date de publication de la demande: 23.12.2020
(73) Titulaire: Graphite Technology Asia Limited, Hong Kong (CN)
(72) Inventeur: HUG, Christian, 200086 Shanghai (CN)
(74) Mandataire: LLR

(56) Documents cités:
- DE-A1-102011 078 878
- GB-A- 1 033 035
- US-A- 2 788 794
- US-A1- 2018 040 926

## Description

L'invention concerne un détecteur de variation brusque de pression dans un fluide, et plus particulièrement un détecteur irréversible de variation de la pression dans un fluide.

Dans de nombreux domaines, la détection de surpression dans un équipement industriel est nécessaire pour des raisons de sécurité ou pour prévenir une détérioration de l'équipement. Cette détection peut être faite par différents types de capteurs. Un type de capteur connu comprend une membrane ou diaphragme qui se déforme sous l'effet d'une augmentation de la pression sur une de ses faces, et un moyen de mesure de la déformation permettant de connaître la valeur de l'augmentation de la pression. Un autre moyen de détecter une surpression consiste en l'utilisation d'un disque de rupture. Notamment, on connaît déjà dans l'état la technique, d'après le document US 5,313,194, un dispositif permettant de détecter une surpression fonctionnant par rupture d'une membrane ou d'un voile de matière. Ce dispositif comprend un disque de rupture comprenant une membrane électriquement conductrice et un boîtier, et qui est relié par des fils conducteurs à un circuit générant un signal. Ainsi, en fonctionnement normal, le courant électrique traverse le disque et passe d'un fil électrique à l'autre. La détection d'une surpression se fait par rupture du disque qui entraîne une coupure du circuit électrique formé par les fils et le disque. Ce dispositif permet par conséquent de détecter de manière simple et irréversible une surpression dans un équipement industriel. Aussi, le document DE102011078878A1 divulgue un disque de rupture poreux, fermant un rouleau creux, capable d'équilibrer des variations de pressions lentes, et qui se rompt en cas de surpression dans le rouleau.

Néanmoins, ces dispositifs permettent de détecter le dépassement d'une valeur seuil de pression prédéterminée, mais ne permettent pas de détecter des variations brusques de la pression qui sont susceptibles d'endommager les équipements. De plus, leur construction implique qu'ils seraient endommagés s'ils étaient placés dans des milieux corrosifs ou s'ils subissaient des températures élevées.

Ainsi, l'invention a notamment pour but de fournir un dispositif simple permettant de détecter efficacement des variations brusques de pression dans un fluide.

De préférence, le dispositif selon l'invention est peu coûteux et résiste à la fois à des températures élevées et à des milieux corrosifs.

A cet effet l'invention a pour objet un dispositif de détection de variation brusque de pression dans un fluide, comprenant :
- un boîtier ouvert à une de ses extrémités,
- un voile fermant le boîtier pour créer une chambre, le voile étant configuré de manière telle que, lorsque la pression extérieure à la chambre est sensiblement stable ou varie lentement, la pression intérieure de la chambre est voisine de la pression extérieure,
et le voile possédant des caractéristiques mécaniques telles qu'il se rompt lorsqu'il est soumis à un écart prédéterminé entre la pression extérieure et la pression intérieure.

Selon l'invention, on entend par « variation brusque » une variation très rapide et imprévue de la pression. A contrario, on entend par « varie lentement » que la variation n'est pas brusque. Une telle variation non brusque se fait dans une durée relativement longue ou dans des conditions de variation qui sont prévues à l'avance et correspondent à un fonctionnement sans anomalie de l'équipement industriel.

Le dispositif de détection de variation de pression détecte des chutes brutales de pression aussi bien que des augmentations brutales.

Ainsi, le dispositif de détection de variation de pression est de conception simple, tout en pouvant être calibré pour se rompre à des variations de pression prédéterminées. En outre, il ne nécessite pas de moyens de fixation sur l'équipement dans lequel il détecte des variations de pression et peut être simplement posé dans l'équipement.

Suivant d'autres caractéristiques optionnelles du dispositif de détection de variation brusque de pression dans un fluide prises seules ou en combinaison :
- le voile est poreux. La porosité du voile permet d'équilibrer les pressions intérieure et extérieure de la chambre. La porosité peut être choisie pour équilibrer « lentement » les pressions, tout en permettant une rupture lorsque la variation est brusque, du fait que les pressions ne pourront pas s'équilibrer suffisamment rapidement pour éviter un écart de pression de part et d'autre du voile, conduisant à sa rupture ;
- le voile comprend du graphite imprégné par une résine, de préférence par une résine phénolique. Le graphite imprégné par une résine phénolique possède des propriétés mécaniques adéquates pour une rupture lors d'écarts de pression. En outre, il est particulièrement bien adapté à des utilisations dans des milieux corrosifs et à des températures élevées. Enfin, sa porosité peut être choisie pour permettre d'équilibrer lentement les pressions ;
- le voile est exclusivement constitué de graphite imprégné par une résine, de préférence par une résine phénolique. Cela augmente encore la capacité du dispositif à être utilisé dans des milieux corrosifs.
- le dispositif comprend plusieurs voiles possédant des épaisseurs différentes les unes des autres. Les avantages de cette caractéristique seront compris à la lumière de l'exemple décrit ci-après.
- les voiles sont positionnés par ordre d'épaisseur croissante, et le voile de plus faible épaisseur est situé le plus à l'extérieur. Cette caractéristique permet de détecter des variations de plus en plus importantes de la pression ;
- le dispositif comprend en outre un dispositif de mesure positionné dans la chambre. Le dispositif de mesure positionné dans la chambre permet de mesurer un paramètre supplémentaire utile au moment de la rupture du voile ou juste après, par exemple une pression, une température, un temps ;
- le dispositif de mesure positionné dans la chambre est un horodateur. Ainsi, il est possible de connaître le moment précis auquel s'est produite la variation brusque de la pression ayant entraîné une rupture du voile ;
- le dispositif de mesure positionné dans la chambre est un capteur de pression. Ainsi, il est possible de connaître la valeur maximale de la pression au moment de la rupture du voile, en plus de la valeur de la variation ;
   En outre, le dispositif de mesure positionné dans la chambre peut être à usage unique, et se déclenche lorsque le voile se rompt.

### Brève description des figures

L'invention sera mieux comprise à la lecture de la description qui va suivre donnée uniquement à titre d'exemple et faite en se référant aux dessins annexés dans lesquels :
[fig.1] La figure 1 est une vue en coupe schématique d'un dispositif selon un premier mode de réalisation de l'invention.
[fig.2] La figure 2 est une vue du dispositif de la figure 1 après rupture du voile.
[fig.3] Les figures 3a et 3b sont des vues en coupe schématique d'un dispositif selon un troisième mode de réalisation de l'invention, comprenant plusieurs voiles de rupture. La figure 3a montre les voiles avant rupture, la figure 3b montrent certains voiles après rupture et d'autres encore intacts.
[fig.4] Les figures 4a et 4b sont des vues en coupe schématiques d'un dispositif selon un quatrième mode de réalisation de l'invention, comprenant un capteur supplémentaire placé dans la chambre.
[fig.5] La figure 5 représente des exemples de courbes de variation de la pression intérieure et de la pression extérieure pour un voile particulier.

### Description détaillée

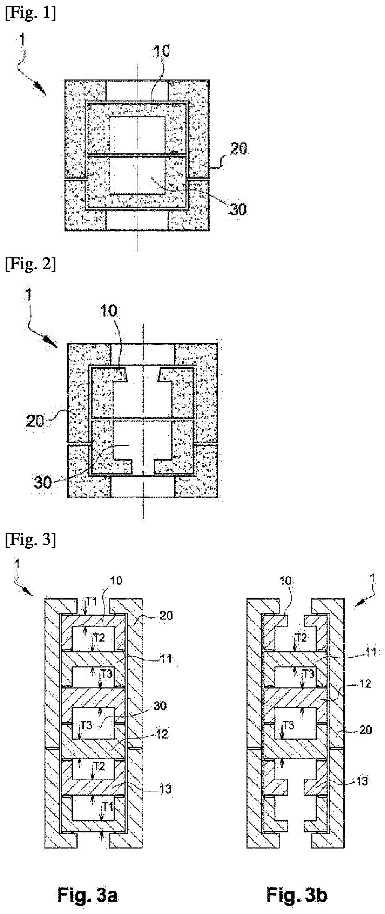

On a représenté sur les figures 1 et 2 un dispositif de détection de variations de pression selon un premier mode de réalisation, désigné par la référence générale 1.

Le dispositif 1 selon l'invention permet de détecter des variations brusques de pression dans un fluide, ou autrement dit, dans un milieu gazeux ou liquide. Le dispositif 1 est installé dans un équipement industriel susceptible d'être endommagé par des variations brusques de pression d'un fluide employé dans cet équipement.

La figure 1 représente un mode de réalisation du dispositif 1 avant rupture. Le dispositif 1 comprend un boîtier 20 cylindrique ouvert à deux de ses extrémités opposées, et un voile de révolution 10 fermant le boîtier 20 à chacune des extrémités ouvertes, pour créer une chambre 30. Le boîtier 20 maintient le voile 10 et le protège. La forme cylindrique du dispositif 1 de la figure 1 est un exemple d'illustration, le dispositif 1 peut prendre n'importe quelle forme permettant que le boîtier 20 soit ouvert à au moins une de ses extrémités et le voile 10 fermant cette extrémité. A titre d'exemple, le boîtier 20 peut avoir une hauteur totale de l'ordre 35 mm, et un diamètre extérieur de l'ordre de 35 mm également. Toujours à titre d'exemple, le diamètre intérieur du boîtier 20 peut être de l'ordre de 15 mm.

En outre, le boîtier 20 peut adopter différentes formes de façon à pouvoir être fixé dans le milieu dans lequel le dispositif 1 est utilisé. En particulier, l'ajout d'oeillets, de boucles est possible pour permettre la fixation du dispositif sur une partie de l'équipement dans lequel il est utilisé, par exemple une paroi. On comprend toutefois que ces moyens ne sont pas nécessaires et que le dispositif 1 peut être simplement posé dans l'équipement à l'intérieur duquel il détecte des variations de pression.

La figure 2 représente un dispositif 1 après rupture du voile 10. Le voile 10 se rompt lorsque la pression du fluide à l'extérieur de la chambre 30 dépasse la pression à l'intérieur de la chambre 30 d'une valeur prédéterminée. Étant donné que le voile est configuré de manière telle que, lorsque la pression extérieure à la chambre est sensiblement stable ou varie lentement, la pression intérieure de la chambre est voisine de la pression extérieure, un tel écart de pression ne peut se produire que si la pression à l'extérieur de la chambre varie de manière brusque. Cela est rendu possible par des caractéristiques mécaniques appropriées du ou des matériaux composant le voile 10.

Le voile 10 est en effet configuré de manière telle que, lorsque la pression extérieure à la chambre 30 est sensiblement stable ou varie lentement, la pression intérieure de la chambre 30 est voisine de la pression extérieure. Cette caractéristique est obtenue par exemple grâce à un voile poreux, dont la porosité est choisie pour permettre d'équilibrer la pression entre l'intérieur et l'extérieur de la chambre 30 dans des conditions de pression sensiblement stables dans l'équipement dans lequel est installé le dispositif 1.

La porosité du voile 10 est également suffisamment faible pour que lorsque la variation de pression extérieure est brusque, les pressions extérieure et intérieure à la chambre 30 ne s'équilibrent pas instantanément. De ce fait, le voile 10 est soumis dans ce cas à un différentiel de pression importante, entraînant une force supérieure à son seuil de rupture. La porosité est choisie en fonction des variations de pression que l'on souhaite détecter, mais également en fonction du milieu dans lequel est placé le dispositif 1.

Dans un mode de réalisation, le calibrage de la vitesse de variation de la pression de rupture détectable par le dispositif 1 est réalisé en choisissant l'épaisseur du voile 10 de manière telle que sa rupture mécanique se produit pour une vitesse de variation de pression prédéterminée entre les deux faces du voile.

Le dispositif 1 est de préférence de petite taille. De la sorte, il est bien adapté pour être placé dans tous types d'équipements susceptibles de subir des variations de pression, afin de surveiller la vitesse maximale de variation de pression auquel il est soumis. Ceci est particulièrement utile pour des équipements faisant l'objet de garanties mécaniques de résistance aux variations brusques de pression. Le dispositif 1 permet ainsi de déterminer si le dommage sur un équipement industriel, par exemple une tuyauterie, est dû à un défaut de fabrication de l'équipement sous pression ou bien est dû à une mauvaise utilisation de l'équipement ayant provoqué une variation brusque de la pression, telle que lors d'un coup de bélier ou du mauvais contrôle d'une pompe. Ceci est ainsi particulièrement utile pour la définition des responsabilités lors d'un problème d'endommagement pour appliquer des garanties ou obtenir des couvertures d'assurances.

Avantageusement, le dispositif 1 est réalisé dans des matériaux qui permettent une résistance à la corrosion et à la température très importante, ce qui rend le dispositif 1 utilisable dans la plupart des équipements industriels. De préférence, le voile 10 comprend du graphite imprégné par une résine, de préférence une résine phénolique. En effet, le graphite imprégné présente des résistances à la corrosion et à la température qui le rendent particulièrement adapté pour la fabrication du voile 10 du dispositif 1.

Dans un mode de réalisation particulier, le voile 10 est exclusivement constitué de graphite imprégné par une résine. Cela le rend davantage résistant à la corrosion et à des températures élevées.

A titre d'exemple, pour la réalisation d'un dispositif de détection de variation brusque de pression 1 sensible à une variation de pression de 2 bar/minute, un voile de rupture 10 en graphite imprégné d'épaisseur 0,9 mm et de diamètre 15 mm peut être utilisé. Cette épaisseur de 0,9 mm correspond à une rupture à température normalisée de 20°C de 1,7 bar qui a été vérifiée par des tests effectués sur un échantillon du matériau utilisé pour la fabrication du dispositif.

Ainsi, lorsque le dispositif 1 ainsi fabriqué est soumis à une variation de la pression extérieure à la chambre 30 supérieure à 2 bars/minute, le différentiel de pression entre l'intérieur de la chambre 30 et l'extérieur de la chambre 30 est supérieur à 1,7 bar et provoque la rupture du voile 10.

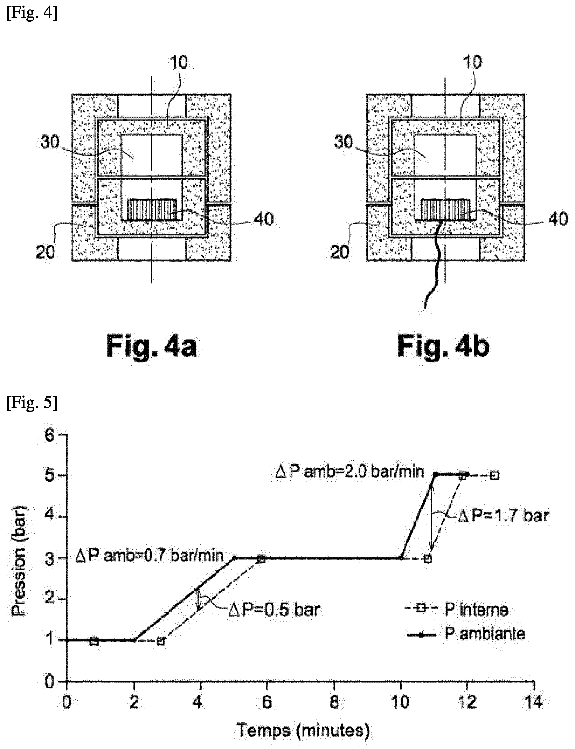

A titre d'information des exemples de courbes illustrant l'impact de la vitesse à laquelle la pression extérieure (ou pression ambiante) change sur la différence de pression entre le fluide sous le voile 10 et le fluide extérieur sont représentés à la figure 5.

Dans d'autres modes de réalisation, le voile 10 est fabriqué en un métal qui résiste à la corrosion et aux températures élevées du milieu dans lequel il est immergé lors de son utilisation.

Le boîtier 20 peut également comprendre du graphite, ou tout autre matériau résistant à la corrosion et à des températures élevées, par exemple une céramique, ou un métal ou un alliage métallique tel que de l'acier inoxydable, ou du titane.

Avantageusement, le dispositif 1 est disposé librement dans un espace de l'équipement dans lequel il les variations de pressions du procédé ou de l'équipement qu'il contrôle.

On notera que, à la différence des disques de rupture fréquemment présents sur les équipements industriels, la fonction du dispositif 1 n'est pas d'évacuer la pression en créant une ouverture sur un espace d'expansion. Sa fonction est de servir de témoin de pression, par exemple en cas de litige sur une garantie d'équipement ou pour le contrôle de pression sur des procédés utilisant des liquides ou des gaz.

Le dispositif 1 permet de garder la trace d'un unique évènement. Il doit être remplacé après rupture causée par la variation de pression pour laquelle il a été calibré.

La rupture du voile 10 du dispositif 1 est irréversible et extrêmement rapide. Le temps de réponse du dispositif 1 du fait du matériau utilisé, en fait un dispositif très sensible à des pics de pression de très faible durée, par exemple de l'ordre de la milliseconde.

Lors de l'utilisation, l'exploitant de l'équipement dans lequel est placé le dispositif 1 définit lui-même la fréquence de contrôle visuel du dispositif. Le dispositif 1 est ainsi retiré périodiquement de l'espace de l'équipement dans lequel il est placé pour une inspection visuelle. S'il ne présente pas de dommage, il est remis en place. Si le voile 10 est rompu le dispositif 1 est remplacé par un nouveau dispositif.

La figure 3 présente un autre mode de réalisation du dispositif 1. Dans ce mode de réalisation, le dispositif 1 comprend plusieurs voiles 10, 11, 12 possédant des épaisseurs différentes les uns les autres. Avantageusement, les voiles sont positionnés par ordre d'épaisseur et les voiles d'épaisseur les plus faibles sont situés le plus à l'extérieur de la chambre 30. Ce mode de réalisation permet de détecter différentes variations de pression. Cela peut être utile si l'on sait que dans certains équipements l'endommagement est différent selon la variation de pression (vitesse de variation et intensité de la pression).

Les figures 4a et 4b présentent encore un autre mode de réalisation du dispositif 1. Dans ce mode de réalisation, un dispositif de mesure 40 est positionné dans la chambre 30. Ce dispositif de mesure 40 permet de mesurer un paramètre supplémentaire lors de la rupture du voile 10. Le dispositif 40 peut être un horodateur, permettant par exemple d'enregistrer le moment précis où s'est produit la rupture du voile 10. Le dispositif 40 peut également être un capteur de pression « classique », donnant une information sur la pression maximale atteinte au moment de la rupture du voile 10, en plus de l'information sur la variation brusque de pression donnée par le dispositif 1. Dans le mode de réalisation de la figure 4a le dispositif de mesure 40 est un dispositif sans fil. Dans le mode de réalisation de la figure 4b le dispositif de mesure 40 est connecté par un fil. Le dispositif de mesure 40 peut être du type à usage unique, capable de remplir sa fonction une seule fois lors de sa première mise en contact avec le fluide environnant le dispositif selon l'invention. Sa protection à l'intérieur de la chambre permet de lui faire prendre la mesure uniquement lors de la rupture du voile 10.

L'invention n'est pas limitée aux modes de réalisation présentés et d'autres modes de réalisation apparaîtront clairement à l'homme du métier.

## Revendications

1. Dispositif (1) de détection de variation brusque de pression dans un fluide, comprenant :
- un boîtier (20) ouvert à une de ses extrémités,
- un voile (10) fermant le boîtier (20) pour créer une chambre (30), le voile (10) étant poreux et le dispositif est **caractérisé en ce que** la porosité du voile est choisie pour équilibrer lentement les pressions extérieure et intérieure à la chambre (30), de manière que, lorsque la pression extérieure à la chambre (30) est sensiblement stable ou varie lentement, la pression intérieure de la chambre (30) est voisine de la pression extérieure, et lorsque la variation de la pression extérieure à la chambre (30) est brusque, le voile (10) se rompt lorsqu'il est soumis à un écart prédéterminé entre la pression extérieure et la pression intérieure.

2. Dispositif (1) de détection de variation de pression dans un fluide selon la revendication précédente, dans lequel le voile (10) comprend du graphite imprégné par une résine, de préférence par une résine phénolique.

3. Dispositif (1) de détection de variation de pression dans un fluide selon l'une des revendications précédentes, dans lequel le voile (10) est exclusivement constitué de graphite imprégné par une résine, de préférence par une résine phénolique.

4. Dispositif (1) de détection de variation de pression dans un fluide selon l'une des revendications précédentes, comprenant plusieurs voiles (10, 11, 12, 13) possédant des épaisseurs différentes les unes des autres.

5. Dispositif (1) de détection de variation de pression dans un fluide selon la revendication précédente, dans lequel les voiles (10, 11, 12, 13) sont positionnés par ordre d'épaisseur croissante, et le voile de plus faible épaisseur est situé le plus à l'extérieur.

6. Dispositif (1) de détection de variation de pression dans un fluide selon l'une des revendications précédentes, comprenant en outre un dispositif de mesure (40) positionné dans la chambre (30).

7. Dispositif (1) de détection de variation de pression dans un fluide selon la revendication 6, dans lequel le dispositif de mesure (40) est un horodateur.

8. Dispositif (1) de détection de variation de pression dans un fluide selon la revendication 6, dans lequel le dispositif de mesure (40) est un capteur de pression.

## Patentansprüche

1. Vorrichtung (1) zum Detektieren einer abrupten Druckveränderung in einem Fluid, umfassend:
- ein Gehäuse (20), das an einem seiner Enden offen ist,
- ein Schleier (10), der das Gehäuse (20) verschließt, um eine Kammer (30) zu erzeugen,
wobei der Schleier (10) porös ist und wobei die Vorrichtung **dadurch gekennzeichnet ist, dass** die Porosität des Schleiers gewählt ist, um den Druck außerhalb und innerhalb der Kammer (30) auszugleichen, so dass, wenn der Druck außerhalb der Kammer (30) im Wesentlichen stabil ist oder sich langsam verändert, der Innendruck der Kammer (30) nahe dem Außendruck ist, und, wenn die Veränderung des Drucks außerhalb der Kammer (30) abrupt ist, der Schleier (10) bricht, wenn er einem vorbestimmten Unterschied zwischen dem Außendruck und dem Innendruck ausgesetzt ist.

2. Vorrichtung (1) zum Detektieren einer Druckveränderung in einem Fluid nach dem vorhergehenden Anspruch, wobei der Schleier (10) Graphit umfasst, das mit einem Harz, bevorzugt mit einem Phenolharz, getränkt ist.

3. Vorrichtung (1) zum Detektieren einer Druckveränderung in einem Fluid nach einem der vorhergehenden Ansprüche, wobei der Schleier (10) ausschließlich aus Graphit besteht, das mit einem Harz, bevorzugt mit einem Phenolharz, getränkt ist.

4. Vorrichtung (1) zum Detektieren einer Druckveränderung in einem Fluid nach einem der vorhergehenden Ansprüche, umfassend mehrere Schleier (10, 11, 12, 13), die voneinander verschiedene Dicken aufweisen.

5. Vorrichtung (1) zum Detektieren einer Druckveränderung in einem Fluid nach dem vorhergehenden Anspruch, wobei die Schleier (10, 11, 12, 13) in der Reihenfolge zunehmender Dicke positioniert sind und der Schleier mit der geringsten Dicke sich am weitesten außen befindet.

6. Vorrichtung (1) zum Detektieren einer Druckveränderung in einem Fluid nach einem der vorhergehenden Ansprüche, umfassend ferner eine Messvorrichtung (40), die in der Kammer (30) positioniert ist.

7. Vorrichtung (1) zum Detektieren einer Druckveränderung in einem Fluid nach Anspruch 6, wobei die Messvorrichtung (40) ein Zeitstempel ist.

8. Vorrichtung (1) zum Detektieren einer Druckveränderung in einem Fluid nach Anspruch 6, wobei die Messvorrichtung (40) ein Druck-Sensor ist.

## Claims

1. Device (1) for detecting a sudden pressure variation in a fluid, comprising:
- a housing (20) open at one of its ends,
- a wall (10) closing the housing (20) to create a chamber (30),
the wall (10) being porous, and the device **characterized in that** the porosity of the wall is chosen to balance the internal and external pressures of the chamber (30) slowly, so that when the external pressure outside the chamber (30) is substantially stable or varies slowly, the internal pressure of the chamber (30) is close to the external pressure, and when the variation of the external pressure outside the chamber (30) is sudden, the wall (10) ruptures when it is subjected to a predetermined difference between the external pressure and the internal pressure.

2. Device (1) for detecting a sudden pressure variation in a fluid according to the preceding claim, wherein the wall (10) comprises graphite impregnated with a resin, preferably with a phenolic resin.

3. Device (1) for detecting a sudden pressure variation in a fluid according to one of the preceding claims, wherein the wall (10) consists exclusively of graphite impregnated with a resin, preferably with a phenolic resin.

4. Device (1) for detecting a sudden pressure variation in a fluid according to one of the preceding claims, comprising a plurality of walls (10, 11, 12, 13) having different thicknesses from one another.

5. Device (1) for detecting a sudden pressure variation in a fluid according to one of the preceding claims, wherein the walls (10, 11, 12, 13) are positioned in order of increasing thickness, and the wall of the thinnest thickness is outermost located.

6. Device (1) for detecting a sudden pressure variation in a fluid according to one of the preceding claims, further comprising a measuring device (40) positioned in the chamber (30).

7. Device (1) for detecting a sudden pressure variation in a fluid according to claim 6, wherein the measuring device (40) is a timestamping machine.

8. Device (1) for detecting a sudden pressure variation in a fluid according to claim 6, wherein the measuring device (40) is a pressure sensor.
